# EUROPEAN PATENT APPLICATION

(11) **EP 3 470 977 A1**
(43) Date of publication of application: **17.04.2019**
(21) Application number: 18199335.3
(22) Date of filing: 09.10.2018
(51) Int. Cl.: G06F 8/65, B66B 5/00, B66B 1/34

(54) **COMMISSIONING AND UPGRADING REMOTE SOFTWARE/FIRMWARE USING AUGMENTED REALITY**

(30) Priority: 13.10.2017 IN 201711036544
(71) Applicant: Otis Elevator Company, Farmington, Connecticut 06032 (US)
(72) Inventor: SWAMI, Aditya, 500081 Hyderabad (IN)
(74) Representative: Schmitt-Nilson Schraud Waibel Wohlfrom Patentanwälte Partnerschaft mbB

(57) **Abstract**

A software commissioning system is provided. The software commissioning system includes an intermediary controller; equipment communicative coupled to the intermediary controller; and an augmenting device. The intermediary controller facilitates commissioning or updating operations. The augmenting device includes a scanner capturing information from one or more codes associated with the equipment. The augmenting device includes a control circuit automatically executing commissioning or updating operations with respect to the equipment and in response to the scanner capturing the information. During commissioning or updating operations, the control circuit communicates the information to a backend subsystem to initiate a remote verification service that verifies the equipment and causes the downloading of software for the equipment.

## Description

Typical elevator systems utilizing cloud commissioning of software/firmware require a manual intervention to verify operability of the elevator systems on-site. For instance, a mechanic visits the site, communicates via phone with a helpdesk or a customer care line to initiate the cloud commissioning of the software/firmware, and manually tests the elevator systems. Further, the mechanic in many cases may also bring the software/firmware on a portable drive to manually update the software/firmware if there is an issue with the cloud commissioning.

In accordance with one or more embodiments, a software commissioning system is provided. The software commissioning system comprises an intermediary controller; equipment communicative coupled to the intermediary controller; and an augmenting device. The intermediary controller facilitates commissioning or updating operations. The augmenting device comprises a scanner capturing information from one or more codes associated with the equipment; and a control circuit automatically executing commissioning or updating operations with respect to the equipment and in response to the scanner capturing the information, and wherein, during commissioning or updating operations, the control circuit communicates the information to a backend sub-system to initiate a remote verification service that verifies the equipment and causes the downloading of software for the equipment.

In accordance with one or more embodiments or the software commissioning system above, the intermediary controller can operate to facilitate the commissioning or updating operations of the equipment based on the remote verification service.

In accordance with one or more embodiments or any of the software commissioning systems above, the remote verification service of the backend sub-system can comprise utilizing the information to determine if the equipment needs to be commissioned or updated and causing the intermediary controller to facilitate a corresponding commissioning or updating operation.

In accordance with one or more embodiments or any of the software commissioning systems above, the information can comprise serial numbers of the equipment.

In accordance with one or more embodiments or any of the software commissioning systems above, the intermediary controller can execute the downloading of the software for the equipment.

In accordance with one or more embodiments or any of the software commissioning systems above, the augmenting device can execute the downloading of the software for the equipment.

In accordance with one or more embodiments or any of the software commissioning systems above, the equipment can comprise an elevator and an elevator controller that operate and control positions, speeds, destinations, and door operations of the elevator.

In accordance with one or more embodiments or any of the software commissioning systems above, the backend sub-system can cross-reference commission data to verify whether the equipment has been commission.

In accordance with one or more embodiments or any of the software commissioning systems above, the backend sub-system can supply commissioning software to the augmenting device if the commission data indicates that the equipment has not been commissioned.

In accordance with one or more embodiments or any of the software commissioning systems above, the backend sub-system can cross-reference software version data to verify whether the equipment has been updated.

In accordance with one or more embodiments or any of the software commissioning systems above, the backend sub-system can supply correct software to the augmenting device if the software version data indicates that the equipment has not been updated.

In accordance with one or more embodiments or any of the software commissioning systems above, the software commissioning system can comprise at least one sensor detecting events and generating an electrical signal as a function of the events.

In accordance with one or more embodiment, a software commissioning method is provided. The software commissioning method is executed by an intermediary controller and an augmenting device. The software commissioning method comprises capturing, by a scanner of the augmenting device, information from one or more codes associated with equipment; and automatically executing, by a control circuit of the augmenting device, commissioning or updating operations with respect to the equipment and in response to the scanner capturing the information, and wherein, during commissioning or updating operations, the control circuit communicates the information to a backend sub-system to initiate a remote verification service that verifies the equipment and causes the downloading of software for the equipment.

In accordance with one or more embodiments or the software commissioning method above, the intermediary controller can operate to facilitate the commissioning or updating operations of the equipment based on the remote verification service.

In accordance with one or more embodiments or any of the software commissioning methods above, the remote verification service of the backend sub-system can comprise utilizing the information to determine if the equipment needs to be commissioned or updated and causing the intermediary controller to facilitate a corresponding commissioning or updating operation.

In accordance with one or more embodiments or any of the software commissioning methods above, the information can comprise serial numbers of the equipment.

In accordance with one or more embodiments or any of the software commissioning methods above, the intermediary controller can execute the downloading of the software for the equipment.

In accordance with one or more embodiments or any of the software commissioning methods above, the augmenting device can execute the downloading of the software for the equipment.

In accordance with one or more embodiments or any of the software commissioning methods above, the equipment can comprise an elevator and an elevator controller that operate and control positions, speeds, destinations, and door operations of the elevator.

In accordance with one or more embodiments or any of the software commissioning methods above, the backend sub-system can cross-reference commission data to verify whether the equipment has been commission.

In accordance with one or more embodiments or any of the software commissioning methods above, the backend sub-system can supply commissioning software to the augmenting device if the commission data indicates that the equipment has not been commissioned.

In accordance with one or more embodiments or any of the software commissioning methods above, the backend sub-system can cross-reference software version data to verify whether the equipment has been updated.

In accordance with one or more embodiments or any of the software commissioning methods above, the backend sub-system can supply correct software to the augmenting device if the software version data indicates that the equipment has not been updated.

In accordance with one or more embodiments or any of the software commissioning methods above, at least one sensor can detect events and generate an electrical signal as a function of the events.

The following descriptions should not be considered limiting in any way. With reference to the accompanying drawings, like elements are numbered alike:
FIG. 1 depicts a software commissioning system according to one or more embodiments;
FIG. 2 depicts a augmenting device of a software commissioning system according to one or more embodiments;
FIG. 3 depicts a process flow of a software commissioning system according to one or more embodiments;
FIG. 4 depicts a process flow of a software commissioning system according to one or more embodiments; and
FIG. 5 depicts a process flow of a software commissioning system according to one or more embodiments.

A detailed description of one or more embodiments of the disclosed apparatus and method are presented herein by way of exemplification and not limitation with reference to the Figures.

In accordance with one or more embodiments, a mechanic can physically arrive at a facility (e.g., a high-rise building) where an elevator system, sensors, and an intermediary controller are located. The mechanic can utilize an augmenting device to scan one or more codes of the elevator system, the sensors, and the intermediary controller. By scanning the codes, the augmenting device procures identifying information that is used to initiate and execute commissioning and/or updating operations for software and/or firmware installed on the elevator system, the sensors, and the intermediary controller. In this regard, the augmenting device communicates the identifying information to backend sub-system for verification and to procure the software and/or firmware updates themselves.

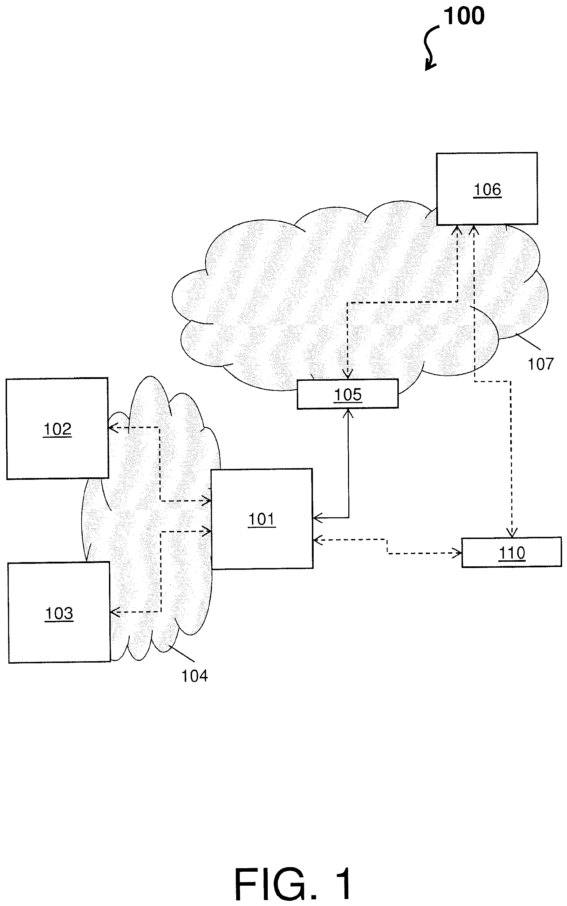

FIG. 1 depicts a software commissioning system 100 according to one or more embodiments. The software commissioning system 100 comprises an intermediary controller 101, a sub-system 102, and at least one sensor 103, each of which communicate over a first network 104. The software commissioning system 100 comprises a gateway 105, a backend sub-system 106, which communicate over a second network 107. The software commissioning system 100 also comprises augmenting device 110.

In general, the software commissioning system 100 operates to commission and update software and/or firmware using augmented reality. The software commissioning system 100 can be integrated with an elevator system, an escalator system, or the like. The software commissioning system 100 is an example and is not intended to suggest any limitation as to the scope of use or operability of embodiments described herein (indeed additional or alternative components and/or implementations may be used). Further, while single items are illustrated for items of the software commissioning system 100, these representations are not intended to be limiting and thus, any item may represent a plurality of items.

The intermediary controller 101 can include any processing hardware, software, or combination of hardware and software utilized by the software commissioning system 100 to carry out computer readable program instructions by performing arithmetical, logical, and/or input/output operations. The intermediary controller 101 operates to facilitate commissioning and updating operations of the sub-system 102 and the at least one sensors 103. Examples of the intermediary controller 101 include, but are not limited to, an arithmetic logic unit, which performs arithmetic and logical operations; a control unit, which extracts, decodes, and executes instructions from a memory; and an array unit, which utilizes multiple parallel computing elements.

The sub-system 102 can be a combination of a movable object and control equipment for operating the movable object. As noted above, since the software commissioning system 100 can be integrated with an elevator system, an escalator system, or the like, the sub-system 102 represent the elevator or escalator system. For instance, if the sub-system 102 is the elevator system, then the movable object can be an elevator and the control equipment can be an elevator controller (which serves to operate and control positions, speeds, destinations, door operations, etc. of the elevator). Further, if the sub-system 102 is the escalator system, then the movable object can be an escalator belt and the control equipment can be a belt controller.

The at least one sensor 103 can be electro-mechanical components that detect events in an environment and generate an electrical signal as a function of the events. The control equipment and the at least one sensor 103 can utilize software and/or firmware to carry out operations particular thereto. The software and/or firmware utilized by the control equipment and the at least one sensor 103 can be provided with respect to the commissioning or updating augmented reality operations of the software commissioning system 100. With respect to the elevator embodiment described herein, the at least one sensor 103 can detect events or changes regarding an environment within the elevator, such as a number of passengers in the elevator, a weight or load in the elevator. In this regard, for example, the at least one sensor 103 can be a strain gain that detects an elevator load. Other examples of the at least one sensor 103 include, but are not limited to, video sensors, infrared sensors, depth sensors, motion sensors, and floor mounted pressure sensors.

The moving object, the control equipment, and/or the at least one sensor 103 can comprise a code. The code is an optical, machine-readable, representation of data describing an object that carries the code itself. The data describing the object can comprise at least a serial number. Examples of the code include, but are not limited to, one-dimensional codes with varying widths and spacings of parallel lines (e.g., a barcode) and two-dimensional codes utilizing rectangles, dots, hexagons and/or other geometric patterns (e.g., a quick response or QR code). Note that the code is not limited to the use of bars themselves.

The first network 104 can be a computer and/or data system that allows and support communications with nodes thereon to share resources (e.g., the elevator sub-system 102, the at least one sensor 103, and the intermediary controller 101). Similarly, the second network 107 can be a computer and/or data system that allows and support communications with nodes thereon to share resources (e.g., the gateway 105 and the backend sub-system 106). An example of the first network 104 can include a controller area network (CAN bus) designed to allow the intermediary controller 101 to communicate with the elevator sub-system 102 and the at least one sensor 103 without a host computer. An example of the second network 107 can include a wide area network designed to allow the gateway 105 to communicate with the backend sub-system 106.

The gateway 105 can be a piece of networking hardware that is equipped for interfacing with one or more networks and devices (e.g., the intermediary controller 101 and the second network 107) utilizing one or more different protocols. The gateway 105 can comprise protocol translators, impedance matching devices, rate converters, fault isolators, or signal translators as necessary to provide communication between the intermediary controller 101 and the backend sub-system 106.

The backend sub-system 106 can be a computer, data server, and/or distributed computing system (e.g., a cloud based backend system) that stores software/firmware, along with provides remote services for the elevator sub-system 102, the at least one sensor 103, and the intermediary controller 101. In this regard, the backend sub-system 106 can provide remote service functionality with respect to verifying serial numbers of and providing software/firmware to the elevator sub-system 102, the at least one sensor 103, and the intermediary controller 101 in connection with the commissioning or updating augmented reality operations of the software commissioning system 100.

The augmenting device 110 cab be a can be a computer and/or mobile device comprising a capability of scanning codes and communicating with other items of the software commissioning system 100 to initiate and execute the commissioning or updating augmented reality operations described herein. Examples of the augmenting device 110 include, but are not limited to, eyewear integrated with computer hardware/firmware, smartphone, mobile phones, tablet computers, and smartwatches.

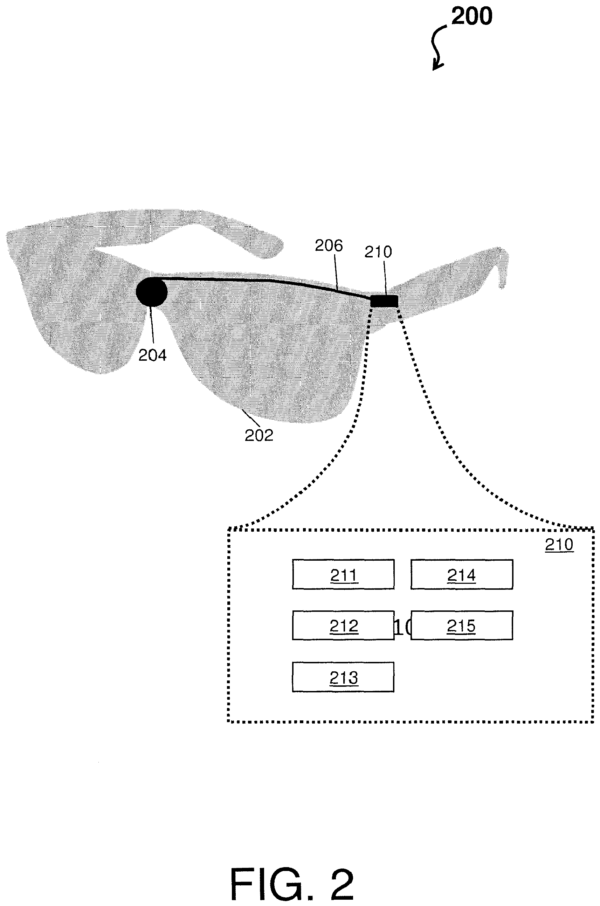

FIG. 2 depicts an augmenting device 200 of a software commissioning system according to one or more embodiments. The augmenting device 200 is a non-limiting example of the augmenting device 110 of FIG. 1. The augmenting device 200 a wearable frame 202, a scanner 204, a communication channel 206, and a control circuit 210. The control circuit 210 can further comprise a processor 211, a memory 212, a transceiver 213, and a battery 214.

The wearable frame 202 can be a glasses frame that supports the other components of the augmenting device 200 while the augmenting device 200 is resting on a user's face. The scanner 204 can be any electronic device that can read or scan codes. Examples of the scanner 204 include, but are not limited to, code readers, laser scanners, image scanners, and cameras. The communication channel 206 can be a wired electrical connection between the scanner 204 and the control circuit 206.

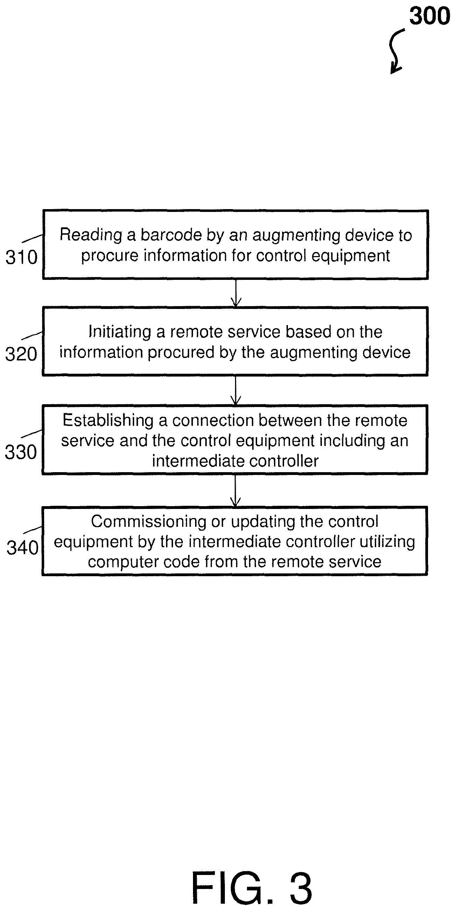

The control circuit 210 can be an embedded system that provides commissioning or updating augmented reality operations. The processor 211 (also referred to as a processing circuit, microprocessor, microcontroller, etc.) of the control circuit 210 can be coupled via a system bus to the memory 212 and various other components. The memory 212 of the control circuit 210 can include a read only memory (ROM) and/or a random access memory (RAM). The ROM is coupled to the system bus and may include a basic input/output system (BIOS), which controls certain basic functions of the memory 212 or. The RAM is read-write memory coupled to the system bus for use by the processor 211. The memory 212 is an example of a tangible storage medium readable, where the software is stored as instructions for execution by the processor 211 to cause the augmenting device 200 to operate, such as is described herein with reference to FIGS. 3-5.

The transceiver 213 of the control circuit 210 can be a communications adapter and/or an interface adapter coupled to the system bus. The transceiver 213 can communicate with the scanner 204 over the communication channel 206 and/or devices in an outside network (e.g., via Bluetooth, Wi-Fi etc.; with respect to FIG. 1: enabling communications between the augmenting device 110 and the backend sub-system 106 across the second network 107 and enabling communications between the augmenting device 110 and the intermediary controller 101). The battery 214 of the control circuit 210 can be a device comprising one or more electrochemical cells with external connections to the other component of the augmenting device 200 to provide power.

FIG. 3 depicts a process flow 300 of a software commissioning system according to one or more embodiments. The process flow 300 generally relates to commissioning and/or updating operations and will be described with reference to FIGS. 1-2. The process flow 300 begins at block 310, where the augmenting device 110 of FIG. 1 reads a code to procure information for control equipment (e.g., of the sub-system 102 of FIG. 1). For instance, the scanner 204 of the augmenting device 200 of FIG. 2 can read one or more codes associated with control equipment of the sub-system 102 of FIG. 1 to procure the information. In accordance with one or more embodiments, the information can comprise serial numbers for the control equipment. Note that the scanner 204 of the augmenting device 200 of FIG.2 can also read one or more codes associated with the sensors 103 of FIG. and/or the intermediary controller 101 of FIG. 1.

At block 320, the augmenting device 110 of FIG. 1 initiates a remote service based on the information procured for the control equipment. For instance, the augmenting device 200 of FIG. 2 communicates via the transceiver 213 across the second network 107 the information (e.g., serial numbers) to the backend sub-system 106 of FIG. 1. Once received, the backend sub-system 106 of FIG. 1 performs the remote service by utilizing the serial numbers to determine if the control equipment needs to be commissioned or updated.

For instance, the backend sub-system 106 of FIG. 1 can search an internal database to locate the entries for the control equipment based on the serial numbers. The internal databased can include a set of tables that maintain up-to-date information for the control equipment with respect to the serial numbers, such as product numbers, manufacturing dates, installations dates, installation locations, commission data, licensing terms, software versions, etc.

With respect to a remote service regarding commission the control equipment, once entries are located, the backend sub-system 106 of FIG. 1 can cross-reference the entries with commission data to verify whether the control equipment has been commission. If the commission data indicates that of the control equipment has not been commissioned, then the backend sub-system 106 of FIG. 1 can communicate that the control equipment needs to be commissioned and can supply commissioning software to the augmenting device 110 of FIG. 1. In accordance with an embodiment, the backend sub-system 106 of FIG. 1 can cross-reference the entries with licensing terms to verify whether the control equipment has the correct software. If the software versions of the entries do not match software detailed in the licensing terms, then the backend sub-system 106 of FIG. 1 can communicate that the control equipment needs the correct software and can supply the correct software to the augmenting device 110 of FIG. 1.

With respect to a remote service regarding updating the software of the control equipment, once entries are located, the backend sub-system 106 of FIG. 1 can cross-reference the entries with current software version data. If the software versions of the entries are older than the current software version data, then the backend sub-system 106 of FIG. 1 can communicate that the control equipment needs to be updated and can supply the correct software to the augmenting device 110 of FIG. 1.

At block 330, a connection is established between the remote service and the control equipment including the intermediate controller 101 of FIG. 1. For instance, the backend sub-system 106 of FIG. 1 can communicate directly with the intermediate controller 101 of FIG. 1 across the second network 107 and the gateway 106 of FIG. 1. In accordance with another embodiment, if the gateway 106 of FIG. 1 is down, the backend sub-system 106 of FIG. 1 can communicate with the intermediate controller 101 of FIG. 1 via the augmenting device 110 of FIG. 1. In either case, the necessary software can be passed from the backend sub-system 106 of FIG. 1 to the intermediate controller 101 of FIG. 1.

At block 340, the intermediate controller 101 of FIG. 1 commissions or updates of the control equipment utilizing computer code (e.g., the necessary software) from the remote service provided by the backend sub-system 106 of FIG. 1.

In view of the above process flow 300, the technical effects and benefits of the software commissioning system 100 of FIG. 1 and the augmenting device 200 of FIG. 2 include an easier verification of the control equipment during commissioning and updating. That is, while a mechanic phones a helpdesk or a customer care line to initiate the cloud commissioning of the software/firmware with typical elevator systems, the easier verification with the software commissioning system 100 of FIG. 1 and the augmenting device 200 of FIG. 2 provides enhanced security due to direct reading of the codes and to automatic downloading of software. Additionally, the technical effects and benefits include a reduction in a mechanic trips to the site as the augmenting device 110 of FIG. 1 capture accurate data and values for any analysis while the mechanic is onsite.

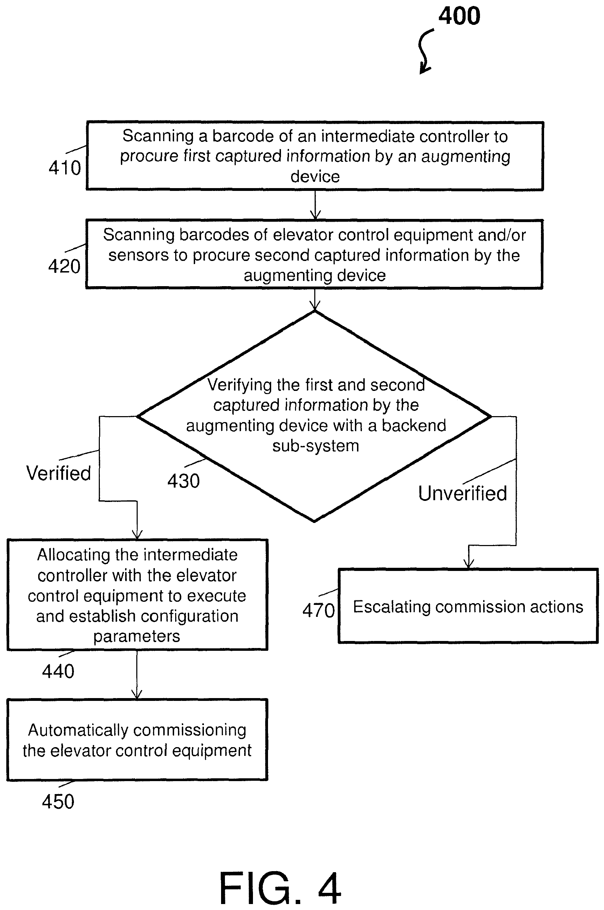

Turning now to FIG. 4-5, commissioning an updating operations of the software commissioning system are herein described. FIG. 4 depicts a process flow 400 of a software commissioning system according to one or more embodiments. The process flow 400 begins at block 410 after a mechanic has arrived a facility including an elevator system. At block 410, an augmenting device is utilized to scan a code of an intermediate controller to procure first captured information. At block 420, the augmenting device is utilized to scan a code of elevator control equipment and/or sensors to procure second captured information.

At decision block 430, the first and second captured information are verified by the augmenting device with a backend sub-system. For instance, the augmenting device communicates the first and second captured information to the backend sub-system. Once the first and second captured information is received, the backend sub-system performs a remote verification service by utilizing the first and second captured information to search an internal database to locate and analyze the entries for the intermediate controller, the elevator control equipment, and sensors. For instance, the backend sub-system can cross-reference commission data to verify software/firmware for the intermediate controller, the elevator control equipment, and sensors is correct.

If the software versions are correct, the process flow 400 proceeds to block 440 (as indicated by the Verified arrow). At block 440, the intermediate controller is allocated with the elevator control equipment to execute and establish configuration parameters (and perform other necessary tasks like configuration of intermediate controller and elevator controller and sensors). At block 450, the intermediate controller automatically commissions the elevator control equipment (by installing the current software).

If the software versions are not correct, the process flow 400 proceeds to block 470 (as indicated by the Unverified arrow). At block 450, escalating commission actions. In accordance with one or more embodiments, the escalating commission actions can include when the augmenting device initiates expert support notification that requires the mechanic to powder down the elevator system.

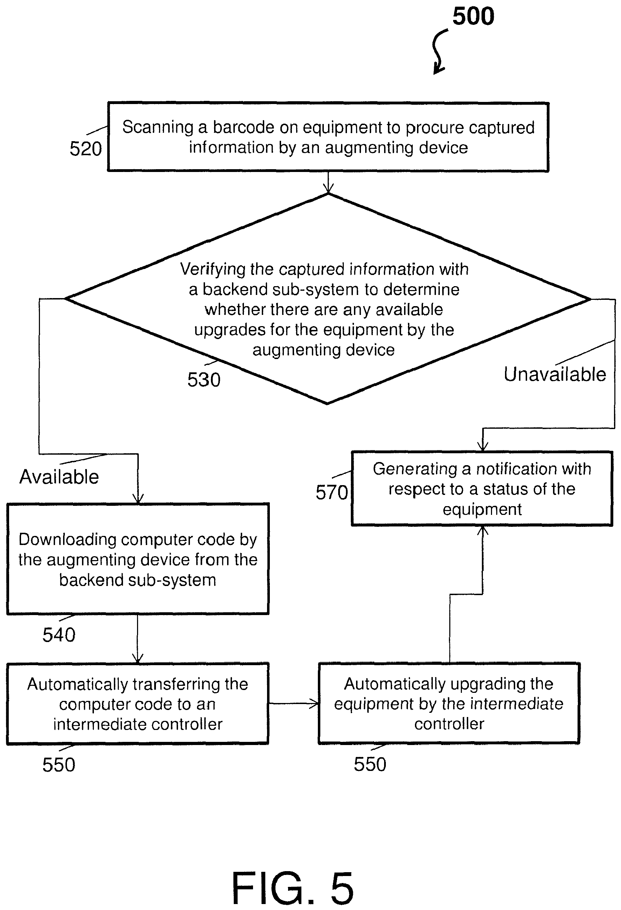

FIG. 5 depicts a process flow 500 of a software commissioning system according to one or more embodiments. The process flow 500 begins at block 520 after a mechanic has arrived a facility including an elevator system. At block 420, the augmenting device is utilized to scan a code on equipment to procure captured information.

At decision block 530, the captured information is verified by the augmenting device with a backend sub-system to determine whether there are any available upgrades for the equipment. For instance, the augmenting device communicates the captured information to the backend sub-system. Once the captured information is received, the backend sub-system performs a remote verification service by utilizing the captured information to search an internal database to locate and analyze the entries for the equipment. For instance, the backend sub-system can cross-reference software version data to verify software/firmware for the equipment.

If the software versions are not correct, the process flow 500 proceeds to block 540 (as indicated by the Available arrow). At block 540, the augmenting device downloads computer code (current software) from the backend sub-system. At block 550, the augmenting device automatically transfers the computer code to an intermediate controller. At block 560, the intermediate controller automatically upgrades the equipment (by installing the current software). The process flow 500 then proceed to block 507.

If the software versions are correct or unavailable, the process flow 500 proceeds to block 570 (as indicated by the Unavailable arrow). At block 570, the augmenting device generating a notification with respect to a status of the equipment, e.g., whether the equipment has been updated or whether no update is available. Note that the status can be reported back to the mechanic and backend sub-system in real-time and simultaneously.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A software commissioning system comprising:
an intermediary controller facilitating commissioning or updating operations;
equipment communicative coupled to the intermediary controller; and
an augmenting device comprising:
a scanner capturing information from one or more codes associated with the equipment; and
a control circuit automatically executing the commissioning or updating operations with respect to the equipment and in response to the scanner capturing the information,
wherein, during commissioning or updating operations, the control circuit communicates the information to a backend sub-system to initiate a remote verification service that verifies the equipment and causes the downloading of software for the equipment.

2. The software commissioning system of claim 1, wherein the intermediary controller operates to facilitate the commissioning or updating operations of the equipment based on the remote verification service.

3. The software commissioning system of claim 1 or 2, wherein the remote verification service of the backend sub-system comprises utilizing the information to determine if the equipment needs to be commissioned or updated and causing the intermediary controller to facilitate a corresponding commissioning or updating operation.

4. The software commissioning system of any of claims 1 to 3, wherein the information comprises serial numbers of the equipment; and/or
wherein the intermediary controller executes the downloading of the software for the equipment.

5. The software commissioning system of any of claims 1 to 4, wherein the augmenting device executes the downloading of the software for the equipment.

6. The software commissioning system of any of claims 1 to 5, wherein the equipment comprises an elevator and an elevator controller that operate and control positions, speeds, destinations, and door operations of the elevator.

7. The software commissioning system of any of claim 1, wherein the backend sub-system cross-reference commission data to verify whether the equipment has been commission; and/or wherein the backend sub-system supplies commissioning software to the augmenting device if the commission data indicates that the equipment has not been commissioned.

8. The software commissioning system of any of claims 1 to 7, wherein the backend sub-system cross-reference software version data to verify whether the equipment has been updated; and/or wherein the backend sub-system supplies correct software to the augmenting device if the software version data indicates that the equipment has not been updated.

9. The software commissioning system of any of claims 1 to 8, wherein the software commissioning system comprises at least one sensor detecting events and generating an electrical signal as a function of the events.

10. A software commissioning method executed by an intermediary controller and an augmenting device, the software commissioning method comprising:
capturing, by a scanner of the augmenting device, information from one or more codes associated with equipment; and
automatically executing, by a control circuit of the augmenting device, commissioning or updating operations with respect to the equipment and in response to the scanner capturing the information,
wherein, during commissioning or updating operations, the control circuit communicates the information to a backend sub-system to initiate a remote verification service that verifies the equipment and causes the downloading of software for the equipment.

11. The software commissioning method of claim 10, wherein the intermediary controller operates to facilitate the commissioning or updating operations of the equipment based on the remote verification service.

12. The software commissioning method of claim 10 or 11, wherein the remote verification service of the backend sub-system comprises utilizing the information to determine if the equipment needs to be commissioned or updated and causing the intermediary controller to facilitate a corresponding commissioning or updating operation.

13. The software commissioning method of any of claims 10 to 12, wherein the information comprises serial numbers of the equipment; and/or
wherein the intermediary controller executes the downloading of the software for the equipment; and/or
wherein the augmenting device executes the downloading of the software for the equipment.

14. The software commissioning method of any of claims 10 to 13, wherein the equipment comprises an elevator and an elevator controller that operate and control positions, speeds, destinations, and door operations of the elevator.

15. The software commissioning method of any of claims 10 to 14, wherein the backend sub-system cross-references commission data to verify whether the equipment has been commission.
